**Europäisches Patentamt**

**European Patent Office**

**Office européen des brevets**

(11) Veröffentlichungsnummer : **0 063 695**
**B1**

(12) **EUROPÄISCHE PATENTSCHRIFT**

(45) Veröffentlichungstag der Patentschrift :
30.10.85

(51) Int. Cl.⁴ : **G 01 R 31/11**

(21) Anmeldenummer : **82102487.4**

(22) Anmeldetag : **25.03.82**

(54) **Verfahren zur Messung von Impulslaufzeiten, Fehlerorten und Dämpfungen auf Kabeln und Lichtwellenleitern.**

(30) Priorität : **15.04.81 DE 3115200**

(43) Veröffentlichungstag der Anmeldung :
**03.11.82 Patentblatt 82/44**

(45) Bekanntmachung des Hinweises auf die Patenterteilung : **30.10.85 Patentblatt 85/44**

(84) Benannte Vertragsstaaten :
**FR GB IT SE**

(56) Entgegenhaltungen :
**DE-A- 2 620 357**
**DE-A- 2 656 911**
**DE-A- 2 837 981**
**DE-A- 2 904 703**
**DE-B- 2 727 392**
**US-A- 4 203 112**

(73) Patentinhaber : **Philips Kommunikations Industrie AG**
**Thurn-und-Taxis-Strasse 10**
**D-8500 Nürnberg 10 (DE)**

(72) Erfinder : **Hilierich, Bernd**
**Burgunderweg 9**
**D-7900 Ulm (DE)**

(74) Vertreter : **Patentanwälte Dr. Solf & Zapf**
**Schlossbleiche 20 Postfach 13 01 13**
**D-5600 Wuppertal 1 (DE)**

## Beschreibung

Die Erfindung betrifft ein Verfahren zur Messung von Impulslaufzeiten, Fehlerorten und Dämpfungen auf Kabeln und Lichtwellenleitern, mit einem Generator für Spannungs- oder Lichtimpulse, die in das Meßobjekt eingespeist werden, mit einem Richtkoppler, der die aus dem Meßobjekt zurückreflexierten Impulse auf einen Detektor leitet.

Derartige Verfahren werden vorwiegend mit Reflektometern ausgeführt, wobei zur Auswertung der Messung meist eine Bildschirmdarstellung erforderlich ist. Insbesondere zur Fehlerortung in Lichtwellenleitern nach dem Rückstreuverfahren ist meist eine aufwendige elektronische Ausstattung erforderlich, um die gewünschten Signale auf dem Bildschirm erkennen zu können. Meist werden hier Sample-and-Hold-Schaltungen oder ähnliche Integrationsverfahren benutzt.

Bekannt ist ein optisches Zeitbereichs-Reflektometer zur Bestimmung der Dämpfung von Lichtleitfasern, bestehend aus einer Lichtquelle, einem Strahlenteiler, einem Detektor, einem Verstärker, einen Signalaufbereiter und einem Anzeigegerät sowie zugehörigen Steuereinheiten, bei dem der Signalaufbereiter aus einer Sample-and-Hold-Schaltung besteht, mit der das durch einen Trägerimpuls periodisch ausgelöste Rückstreusignal abgetastet wird (DE-OS 28 37 981).

Die auf dem Bildschirm eines derartigen Reflektometers dargestellten Rückstreusignale können auf vielerlei Weise ausgewertet werden und lassen Rückschlüsse auf eine Reihe von Eigenschaften des ausgemessenen Lichtwellenleiters zu. In vielen Fällen, insbesondere bei der Fehlersuche, genügt ein kleiner Teil der dabei anfallenden Informationen.

In der DE-BI-27 27 392 wird eine Impuls-Echo-Methode zur Anwendung in der Kabelfehler-Meßtechnik beschrieben. Hieraus ist ein Verfahren zur digitalen Messung von Impulslaufzeiten und Kabellängen bekannt, bei dem ein Taktfrequenz-Generator einen sägezahnförmigen Spannungsverlauf einer Zeitbasis auslöst. Diese Sägezahnspannung wird einem Komperator zugeführt, der beim Erreichen eines bestimmten Wertes der Sägezahnspannung einen Sendeimpulsgenerator auslöst, der Sendeimpulse über eine Anpassungsstufe in das Meßobjekt einspeist. Am Einspeisepunkt entsteht dann ein Impulsverlauf, bestehend aus dem Sendeimpuls selbst und den vom Meßobjekt reflektierten Echoimpulsen. Der Impulsverlauf wird durch jeden Sendeimpuls erneut angeregt — wiederholt sich also periodisch mit der Taktfrequenz — und wird während jeder Periode einmal in einer Abtastschaltung abgetastet. Der Abtastpunkt wird dabei sukzessiv verschoben. Das Abtastergebnis wird dem Y-Eingang einer Kathodenstrahlröhreneinrichtung zugeführt. Die X-Ablenkung wird von einem Treppenspannungsgenerator angesteuert. Eine Schaltungsanordnung bewirkt einen erhellten Punkt im Reflektogramm der Kathodenstrahlröhreneinrichtung, der mittels eines Potentiometers bis zur angemessen Fehlerstelle verschoben werden kann. Mit einer Auswert- und Anzeigeschaltung kann die Entfernung vom Einspeisepunkt bis zu der Fehlerstelle des zu prüfenden Kabels ermittelt werden.

Nachteilig bei diesem bekannten Verfahren ist die Verwendung einer Kathodenstrahlröhre, die sehr empfindlich ist und einen relativ großen Schaltungsaufwand erfordert.

Der Erfindung liegt die Aufgabe zugrunde, ein Verfahren anzugeben, mit dem der Fehlerort in einem Kabel oder in einem Lichtwellenleiter ohne Verwendung einer Kathodenstrahlröhre ausreichend genau und mit möglichst geringem Aufwand festgestellt werden kann.

Diese Aufgabe wird erfindungsgemäß dadurch gelöst, daß durch jeden Impuls des Generators ein Sägezahngenerator ausgelöst wird, daß der zeitliche Wert der vom Sägezahngenerator abgegebenen Spannung über einen Komparator mit einer definiert einstellbaren ersten Gleichspannung verglichen wird, daß dieser Vergleich zum durch die erste Gleichspannung zeitlich definierten Erzeugen eines Impulses dient, daß die Ausgangsspannung des Detektors über einen zweiten Komparator mit einer definiert einstellbaren zweiten Gleichspannung verglichen wird, daß dieser zweite Vergleich zum Aussondern derjenigen zurückreflektierten Signale benutzt wird, die die eingestellte zweite Spannung überschreiten, und daß die zeitliche Koinzidenz dieser ausgesonderten Signale mit dem durch die erste Gleichspannung zeitlich definierten Impuls in einer Torschaltung festgestellt und durch einen Indikator angezeigt wird.

Die mit der Erfindung erzielbaren Vorteile bestehen insbesondere darin, daß zur Durchführung des Verfahrens handelsübliche und robuste Bauteile verwendet werden können, daß auf eine Kathodenstrahlröhre und die dafür notwendige Hochspannungsversorgung verzichtet werden kann und daß ein nach dem erfindungsgemäßen Verfahren arbeitendes Meßgerät auch von angelernten Kräften unter den rauhen Bedingungen auf der Baustelle und bei der Fehlersuche im Gelände benutzt werden kann.

In einer Ausgestaltung erfolgt die Definition der ersten Gleichspannung durch ein erstes Voltmeter, dessen Anzeige in Entfernungswerten geeicht wird. In einer weiteren Ausgestaltung wird die Entfernungsanzeige des Voltmeters durch eine der anderweitig festgestellten Impulsgeschwindigkeit im Meßobjekt entsprechende Änderung der Empfindlichkeit des Voltmeters geeicht.

Diese Ausgestaltung der Erfindung ist besonders vorteilhaft, wenn als Voltmeter ein Digitalmeßgerät verwendet wird, dessen Empfindlichkeit sich stufenlos und problemlos durch die Eingabe von digitalisierten Daten einstellen läßt.

In einer weiteren Ausgestaltung wird die Entfernungsanzeige des Voltmeters durch eine der anderweitig festgestellten Impulsgeschwindigkeit im Meßobjekt entsprechende Änderung der Amplitude der Sägezahnspannung des Sägezahngenerators geeicht.

Diese Ausgestaltung hat den Vorteil, daß sie eine besonders kostengünstige Möglichkeit zum Aufbau eines entsprechenden Meßgerätes bietet.

Weiterhin ist es erfinderisch, die Definition der zweiten Gleichspannung durch ein zweites Voltmeter vorzunehmen, dessen Anzeige in Dämpfungswerten geeicht ist.

Diese Ausgestaltung macht von einem weiteren Vorteil des erfindungsgemäßen Verfahrens Gebrauch, daß ohne zusätzlichen wesentlichen Aufwand mit dem gleichen Gerät auch eine Dämpfungsmessung erfolgen kann, ohne daß das ferne Kabelende zugänglich sein muß.

Ausführungsbeispiele der Erfindung sind in der Zeichnung dargestellt und werden im folgenden näher beschrieben. Es zeigen :

Figur 1   das Blockschaltbild eines Gerätes zur Durchführung des Verfahrens,

Figur 2   das dazugehörige Pulsdiagramm.

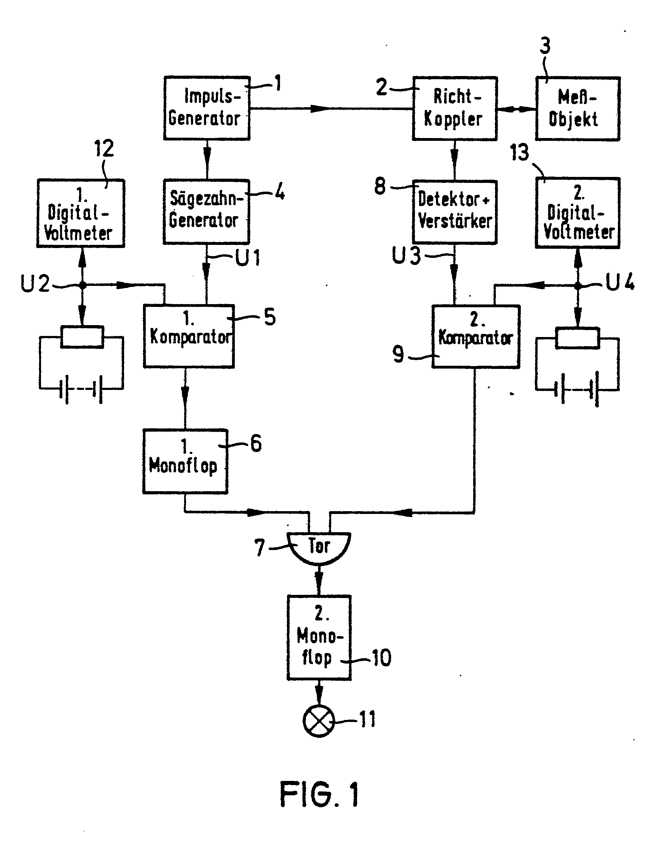

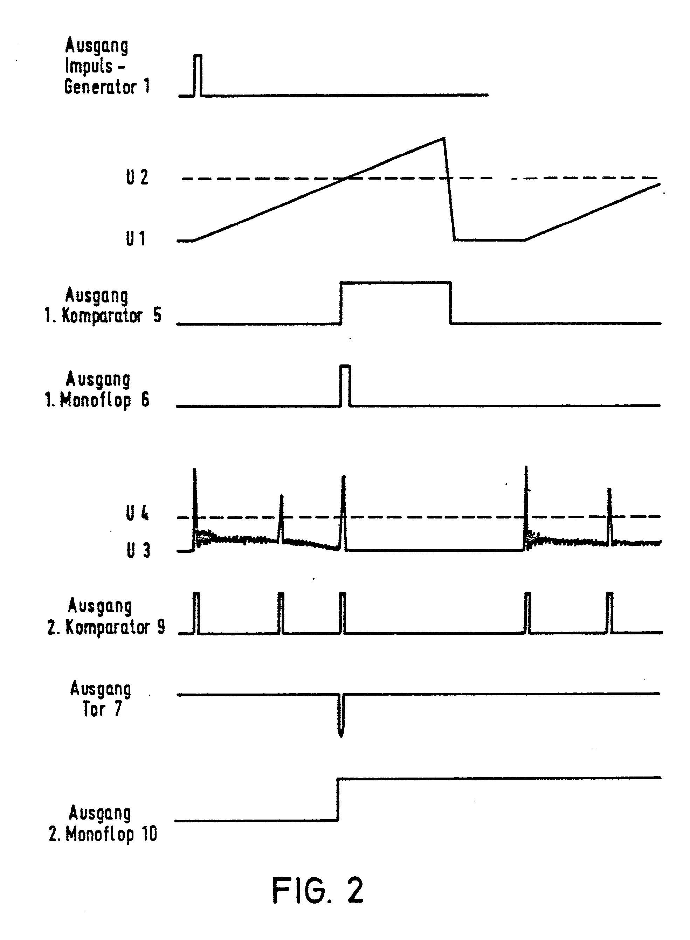

Der Ablauf des Verfahrens wird deutlich bei der gemeinsamen Betrachtung des Blockschaltbildes in Fig. 1 und dem dazugehörigen Impulsdiagramm in Fig. 2. Beide Figuren werden daher gemeinsam besprochen. Der Impulsgenerator 1 erzeugt Impulse, deren Verlauf in der ersten Zeile dargestellt ist. Für die Fehlerortung in einem Lichtwellenleiter sind dies Lichtimpulse, die beispielsweise durch einen Laser erzeugt werden. Sie werden über einen Richtkoppler 2 auf das Meßobjekt 3 geleitet. Der Richtkoppler 2 besteht in diesem Fall aus einem Strahlteiler, vorzugsweise aus einer bekannten Lichtleiterverzweigung. Jeder Impuls des Impulsgenerators 1 startet den Sägezahngenerator 4, dessen Ausgangsspannung U1 in der zweiten Zeile dargestellt ist. Der zeitliche Wert der Sägezahnspannung U1 wird im ersten Komparator 5 mit einer einstellbaren Gleichspannung U2 verglichen. Erreicht die Sägezahnspannung U1 den Wert der Gleichspannung U2, die ebenfalls in der zweiten Zeile gestrichelt eingezeichnet ist, so kippt der Ausgang des ersten Komparators 5 und startet den ersten Monoflop 6, der einen definierten Impuls auf die Torschaltung 7 gibt. Der aus dem Meßobjekt 3 zurückreflexierte Lichtimpuls gelangt über den Richtkoppler 2 auf den Detektor 8, beispielsweise eine Fotodiode mit dahinter geschaltetem Verstärker, dessen Ausgangsspannung U3 in der fünften Zeile dargestellt ist. Diese Ausgangsspannung U3 wird im zweiten Komparator 9 mit einer einstellbaren zweiten Gleichspannung U4 verglichen, die ebenfalls in der 5. Zeile gestrichelt eingezeichnet ist. Tritt ein die Gleichspannung 4 übersteigender Impuls zu der gleichen Zeit auf die Torschaltung 7, in der diese durch den Ausgang des ersten Monoflop geöffnet ist, so startet der zweite Monoflop 10 und erzeugt eine Anzeige auf dem Indikator 11, der beispielsweise aus einer LED bestehen kann. Es ist erkennbar, daß man die Öffnungszeit der Torschaltung 7 durch Verändern der Gleichspannung 2 über den gesamten Zeitraum zwischen 2 Impulsen des Generators 1 verschieben kann. Im Impulsdiagramm der Fig. 2 ist die Torschaltung 7 an einem Zeitpunkt geöffnet, an dem ein besonders kräftiger Impuls aus dem Meßobjekt 3 zurückreflexiert wird, wie es beispielsweise typisch ist für das Ende eines Lichtwellenleiters. Ein weiterer Impuls am Ausgang des Detektors 8 deutet auf einen Fehler auf etwa 2/3 der Länge des Lichtwellenleiters hin. Er kann durch eine Verkleinerung der Gleichspannung U2 auf dem Indikator 11 zur Anzeige gebracht werden. Es ist weiterhin erkennbar, daß die Höhe der Gleichspannung U2 ein Maß für die Impulslaufzeit und somit für den Fehlerort darstellt. Der Wert dieser Gleichspannung U2 kann im einfachsten Fall durch einen geeichten Spannungsteiler ermittelt werden. Für eine bessere Genauigkeit der Fehlerortung empfiehlt es sich aber, den Wert der Spannung U2 durch ein Voltmeter 12 zu messen, dessen Skala in Entfernungswerten geeicht ist. Zur Anpassung an verschiedene Impulsgeschwindigkeiten, wie sie auf Lichtwellenleitern auftreten können, kann die Empfindlichkeit des Voltmeters 12 stufenlos variiert werden, was bei Verwendung eines Digitalvoltmeters unschwer möglich ist. Aus dem Impulsdiagramm Fig. 2 ist aber ebenfalls zu erkennen, daß eine solche Anpassung an die Impulsgeschwindigkeit im Meßobjekt 3 auch durch die Anstiegssteilheit der Sägezahnspannung U1 erfolgen kann.

Es ist weiterhin insbesondere aus dem Impulsverlauf Fig. 2 erkennbar, daß durch Verändern der zweiten Gleichspannung U4 die Amplitude des gerade dargestellten reflexierten Impulses bestimmt werden kann. Das kann im einfachsten Fall wiederum dadurch geschehen, daß diese zweite Gleichspannung U4 über einen geeichten Spannungsteiler abgegriffen wird. Die Genauigkeit dieser zusätzlichen Möglichkeit des Verfahrens zur Dämpfungsmessung kann erheblich verbessert werden, wenn der Wert der zweiten Gleichspannung U4 durch ein zweites Digitalvoltmeter 13 gemessen wird, dessen Anzeige dann zweckmäßig in Dämpfungswerten geeicht wird. Auf diese Weise ist es möglich, Rückstreumessungen auszuführen, und den Dämpfungsverlauf über die ganze Länge des Meßobjektes 3 zu verfolgen. Es ist weiterhin möglich, die Fehlerortung mit dem beschriebenen Verfahren dadurch zu automatisieren, daß man als Spannungsquelle für die Vergleichsspannung U2 einen Sägezahngenerator verwendet, dessen Spannungsanstieg über eine Verbindung mit dem Ausgang des zweiten Komparators 9 in dem Augenblick gestoppt wird, wo hier ein reflexierter Impuls erscheint. Der dazugehörende Entfernungswert ist dann ebenfalls am Voltmeter 12 ablesbar.

## Patentansprüche

1. Verfahren zur Messung von Impulslaufzeiten, Fehlerorten und Dämpfungen auf Kabeln und Lichtwellenleitern, mit einem Generator (1) für Spannungs- oder Lichtimpulse, die in das Meßobjekt (3) eingespeist werden, mit einem Richtkoppler (2), der die aus dem Meßobjekt (3) zurückreflexierten Impulse auf einen Detektor (8) leitet, dadurch gekennzeichnet, daß durch jeden Impuls des Generators (1) ein Sägezahngenerator (4) ausgelöst wird, daß der zeitliche Wert der vom Sägezahngenerator (4) abgegebenen Spannung (U1) über einen Komparator (5) mit einer definiert einstellbaren ersten Gleichspannung (U2) verglichen wird, daß dieser Vergleich zum durch die erste Gleichspannung (U2) zeitlich definierten Erzeugen eines Impulses dient, daß die Ausgangsspannung (U3) des Detektors (8) über einen zweiten Komparator (9) mit einer definiert einstellbaren zweiten Gleichspannung (U4) verglichen wird, daß dieser zweite Vergleich zum Aussondern derjenigen zurückreflexierten Signale benutzt wird, die die eingestellte zweite Spannung (U4) überschreiten, und daß die zeitliche Koinzidenz dieser ausgesonderten Signale mit dem durch die erste Gleichspannung (U2) zeitlich definierten Impuls in einer Torschaltung (7) festgestellt und durch einen Indikator (11) angezeigt wird.

2. Verfahren nach Anspruch 1, dadurch gekennzeichnet, daß die Definition der ersten Gleichspannung (U2) durch ein erstes Voltmeter (12) erfolgt, dessen Anzeige in Entfernungswerten geeicht sind.

3. Verfahren nach Anspruch 2, dadurch gekennzeichnet, daß die Entfernungsanzeige des Voltmeters (12) durch eine der anderweitig festgestellten Impulsgeschwindigkeit im Meßobjekt (3) entsprechende Änderung der Empfindlichkeit des Voltmeters (12) geeicht wird.

4. Verfahren nach Anspruch 2, dadurch gekennzeichnet, daß die Entfernungsanzeige des Voltmeters (12) durch eine der anderweitig festgestellten Impulsgeschwindigkeit im Meßobjekt (3) entsprechende Änderung der Amplitude der Sägezahnspannung (U1) des Sägezahngenerators (4) geeicht wird.

5. Verfahren nach einem der Ansprüche 1 bis 4, dadurch gekennzeichnet, daß die Definition der zweiten Gleichspannung (U4) durch ein zweites Voltmeter (13) erfolgt, dessen Anzeige in Dämpfungswerten geeicht ist.

**Claims**

1. A method of measuring pulse delay times, fault locations and attenuations on cables and optical waveguides, comprising a generator (1) for voltage or light pulses fed into the object (3) to be measured, and a directional coupler (2) which directs pulses reflected from the object (3) to be measured to a detector (8), characterized in that each pulse of the generator (1) enables a sawtooth generator (4), that the instantaneous value of the voltage (U1) produced by the sawtooth generator (4) is compared by means of a comparator (5) to a defined adjustable first d. c. voltage (U2), that this comparison is used for the time-defined generation of a pulse by the first d. c. voltage (U2), that the output voltage (U3) of the detector (8) is compared by means of a second comparator (9) to a defined adjustable second d. c. voltage (U4), that this second comparison is used for eliminating those reflected signals which exceed the adjusted second voltage (U4) and that the coincidence of these eliminated signals and the time-defined pulse generated by the first d. c. voltage (U2) is detected in a gate circuit (7) and is displayed on a display (11).

2. A method as claimed in Claim 1, characterized in that defining the first d. c. voltage (U2) is effected by a first voltmeter (12) whose indicator scale is graduated in calibrated range values.

3. A method as claimed in Claim 2, characterized in that the range indicator of the voltmeter (12) is calibrated by the change in the sensitivity of the voltmeter (12) corresponding to the elsewhere determined pulse rate in the object (3) to be measured.

4. A method as claimed in Claim 2, characterized in that the range indicator of the voltmeter (12) is calibrated by a change in the amplitude of the sawtooth voltage (U1) of the sawtooth generator (4) corresponding to the elsewhere determined pulse rate in the object (3) to be measured.

5. A method as claimed in any one of the Claims 1 to 4, characterized in that defining the second d. c. voltage (U4) is effected by a second voltmeter (13) whose indicator scale is graduated in calibrated attenuation values.

**Revendications**

1. Procédé pour déterminer des temps de transit d'impulsions, des emplacements de défauts et des atténuations dans des câbles et des guides d'ondes optiques comprenant un générateur (1) pour des impulsions de tension ou de lumière qui sont appliquées à l'objet de mesure (3) et comprenant un coupleur directionnel (2) qui aiguille sur un détecteur (8) les impulsions réfléchies par l'objet de mesure (3), caractérisé en ce qu'un générateur de dents de scie (4) est déclenché par chaque impulsion du générateur (1), la valeur temporelle de la tension (U1) fournie par le générateur de dents de scie (4) est comparée par l'intermédiaire d'un comparateur (5) à une première tension continue (U2) réglable de manière définie, cette comparaison sert à la production d'une manière définie dans le temps d'une impulsion par la première tension continue (U2), la tension de sortie (U3) du détecteur (8) est comparée par l'intermédiaire d'un second comparateur (9) à une seconde tension continue (U4) réglable de manière définie, cette seconde comparaison est utilisée pour séparer les signaux réfléchis qui excèdent la seconde tension réglée (U4), et la coïncidence dans le temps de ces signaux triés et de l'impulsion définie dans le temps par la première tension continue (U2) est constatée dans un circuit-porte (7) et est affichée par un indicateur (11).

2. Procédé suivant la revendication 1, caractérisé en ce que la définition de la première tension continue (U2) est assurée par un premier voltmètre (12) dont l'affichage est étalonné en valeurs de distance.

3. Procédé suivant la revendication 2, caractérisé en ce que l'indicateur de distance du voltmètre (12) est étalonné par une modification de la sensibilité du voltmètre (12) correspondant à la vitesse d'impulsions dans l'objet de mesure (3) déterminée d'une autre manière.

4. Procédé suivant la revendication 2, caractérisé en ce que l'indicateur de distance du voltmètre (12) est étalonné par une modification de l'amplitude de la tension en dents de scie (U1) du générateur de dents de scie (4) correspondant à la vitesse d'impulsions dans l'objet de mesure (3) déterminée d'une autre manière.

5. Procédé suivant l'une quelconque des revendications 1 à 4, caractérisé en ce que la définition de la seconde tension continue (U4) est effectuée par un second voltmètre (13) dont l'indicateur est étalonné en valeurs d'atténuation.

FIG. 1

Ausgang
Impuls -
Generator 1

U 2

U 1

Ausgang
1. Komparator 5

Ausgang
1. Monoflop 6

U 4

U 3

Ausgang
2. Komparator 9

Ausgang
Tor 7

Ausgang
2. Monoflop 10

# FIG. 2